Europäisches Patentamt

European Patent Office

Office européen des brevets

(11) Numéro de publication : **0 451 029 B1**

# (12) FASCICULE DE BREVET EUROPEEN

(45) Date de publication du fascicule du brevet :
**20.07.94 Bulletin 94/29**

(51) Int. Cl.[5] : **H04L 12/56**

(21) Numéro de dépôt : **91400850.3**

(22) Date de dépôt : **29.03.91**

(54) **Relais - commutateur de trames pour réseau numérique asynchrone.**

(30) Priorité : **06.04.90 FR 9004438**

(43) Date de publication de la demande :
**09.10.91 Bulletin 91/41**

(45) Mention de la délivrance du brevet :
**20.07.94 Bulletin 94/29**

(84) Etats contractants désignés :
**DE GB IT**

(56) Documents cités :
**EP-A- 0 113 639
EP-A- 0 296 928
EP-A- 0 299 473
WO-A-88/07293**

(56) Documents cités :
**The 15th Annual International Symposium on
Computer Architecture, Honolulu, 30 Mai - 2
Juin 1988, pages 343-354, IEEE Computer
Society Press, Washington, US; Y.Tamir et al. :
"High-performance multi-queue buffers for
VLSI communication switches "**

(73) Titulaire : **FRANCE TELECOM
Etablissement autonome de droit public,
6, Place d'Alleray
F-75015 Paris (FR)**

(72) Inventeur : **Lespagnol, Albert
33 rue de Landerval
F-22700 Perros Guirec (FR)**
Inventeur : **Quinquis, Jean-Paul
14 rue de Cornil
F-22700 Perros Guirec (FR)**

(74) Mandataire : **Martinet & Lapoux
BP 405
F-78055 St. Quentin en Yvelines Cédex (FR)**

## Description

La présente invention concerne un relais-commutateur dans un réseau numérique asynchrone pour commuter des trames entre des voies d'entrée et des voies de sortie. Chacune des trames est divisée en des cellules successives ayant un nombre prédéterminé de bits.

Dans la demande de brevet européen EP-A-0113639 est décrit un relais-commutateur pour des paquets synchrones de longueur fixe. Du point de vue de la commutation, chaque paquet au sens de cette demande de brevet peut être considéré sensiblement analogue à une cellule de trame au sens de la présente invention. En d'autres termes, les cellules ont un nombre de bits prédéterminés constant et sont détectées dans les voies d'entrée afin de les multiplexer et de les mémoriser temporairement dans une mémoire tampon. Toutefois, à la différence de la mémorisation d'un paquet selon la demande de brevet précitée, pour lire une trame en mémoire tampon, il est nécessaire de s'assurer que celle-ci a été écrite complètement.

La présente invention à donc pour but de fournir un relais commutateur de trames de cellule ayant des longueurs variables en faisant appel à la structure générale d'un relais-commutateur décrit dans la demande de brevet EP-A-0113639 afin de ne retransmettre que des trames qui ont été écrites complètement en mémoire tampon vers les voies de sortie.

A cette fin, un relais-commutateur dans un réseau numérique asynchrone pour commuter des trames entre des voies d'entrée et des voies de sortie, chacune des trames étant divisée en des cellules successives ayant un nombre prédéterminé de bits, et une première cellule dans une trame comprenant un identificateur de voie,
ledit relais-commutateur comprenant :

- un étage d'entrée pour détecter les cellules des trames reçues par les voies d'entrée afin de multiplexer des cellules détectées en des cellules multiplexées par cycle de voies,
- une mémoire tampon adressée cycliquement en écriture pour mémoriser les cellules multiplexées,
- une mémoire de traduction pour remplacer l'identificateur de voie par un nouvel identificateur et pour associer à ce nouvel identificateur une adresse de voie de sortie destinataire,
- une pluralité de moyens d'adressage en lecture respectivement associés aux voies de sortie pour mémoriser chacune des adresses relatives à des cellules mémorisées dans la mémoire tampon et destinées à la voie de sortie associée, et
- un étage de sortie pour démultiplexer les cellules dans la mémoire tampon sous le contrôle des moyens d'adressage en lecture, en des cellules démultiplexées formant des trames transmises vers les voies de sortie,
est caractérisé en ce qu'il comprend

- une mémoire de contexte pour mémoriser, pour chaque voie d'entrée, l'adresse de la première cellule relative à une trame reçue par ladite voie d'entrée et en cours d'écriture dans la mémoire tampon, et simultanément l'adresse de voie de sortie destinataire fournie par la mémoire de traduction, en réponse à la première cellule détectée de ladite trame,
- des moyens pour mémoriser des nombres de cellules mémorisées relative à des trames en cours d'écriture et reçue respectivement par lesdites voies d'entrée, chacun desdits nombres étant remis à zéro au début d'une trame reçue par la voie d'entrée associée et étant incrémenté d'une unité en réponse à la mémorisation d'une cellule contenue dans ladite trame,
- une mémoire de contrôle pour mémoriser des nombres de cellules à retransmettre respectivement dans les voies de sortie et contenues dans des trames ayant été complètement écrites dans la mémoire tampon, et
- des moyens pour incrémenter et décrémenter lesdits nombres de cellules à retransmettre, un nombre de cellules à retransmettre associé à une voie de sortie étant incrémenté avec le nombre de cellules mémorisées contenues dans une trame en cours de mémorisation et destinée à ladite voie de sortie en réponse à la dernière cellule de ladite trame, afin de comparer la somme desdits nombres à une capacité de la mémoire tampon relative aux cellules par voie d'entrée, pour écrire l'adresse de la première cellule de ladite trame dans les moyens d'adressage de lecture associés à ladite voie de sortie lorsque la somme est inférieure à ladite capacité, et pour décrémenter le nombre de cellules à retransmettre d'une unité en réponse à chaque cellule de ladite trame lue en mémoire tampon.

D'autres caractéristiques du relais-commutateur sont définies dans les revendications 2 à 6.

D'autres avantages de l'invention apparaîtront plus clairement à la lecture de la description d'une réalisation préférée de l'invention en référence aux dessins annexés correspondants dans lesquels :

- la Fig. 1 montre schématiquement la structure d'une trame numérique ;
- la Fig. 2 montre schématiquement la structure du champ d'adresse dans une trame ;
- la Fig. 3 montre schématiquement la structure d'une cellule de trame ;
- la Fig. 4 montre en détail la structure d'une cellule du type première cellule de trame ou cellule contenant une trame complète ;

2

- la Fig. 5 est un bloc-diagramme schématique d'un relais-commutateur de trames conforme à l'invention ;
- la Fig. 6 montre schématiquement la répartition de cellules de trame mémorisées dans la mémoire tampon du relais-commutateur ;
- la Fig. 7 est un bloc-diagramme détaillé d'un bloc de registres d'écriture et d'un bloc de registres de lecture pour la mémoire tampon, inclus dans le relais-commutateur ;
- la Fig. 8 un diagramme temporel montrant l'ensemble des signaux d'adresse de mot de cellule de trame ;
- la Fig. 9 un diagramme temporel montrant des signaux d'horloge produits par une base de temps inclus dans le relais-commutateur ;
- la Fig. 10 montre schématiquement des décalages temporels d'un temps-mot entre des cellules synchronisées provenant de voies d'entrée et appliquées à une matrice de rotation d'entrée incluse dans le relais-commutateur ;
- la Fig. 11 est un bloc-diagramme détaillé d'une unité de commande et d'adressage inclus dans le relais-commutateur ;
- la Fig. 12 est un diagramme temporel montrant des signaux pour mettre à jour des nombres de cellules mémorisées relatives à des trames en cours de mémorisation en mémoire tampon ;
- la Fig. 13 est un diagramme temporel montrant des signaux pour l'incrémentation et la décrémentation de nombres de cellules à retransmettre respectivement vers des voies de sortie du relais-commutateurs ; et
- la Fig. 14 est un schéma concernant la capacité de la mémoire tampon et illustrant une possibilité d'écrasement de cellules.

Préalablement est défini ci-après, à titre d'exemple, le contenu des "cellules de données" constituant des trames numériques que reçoit, commute et transmet un relais-commutateur de trames selon l'invention.

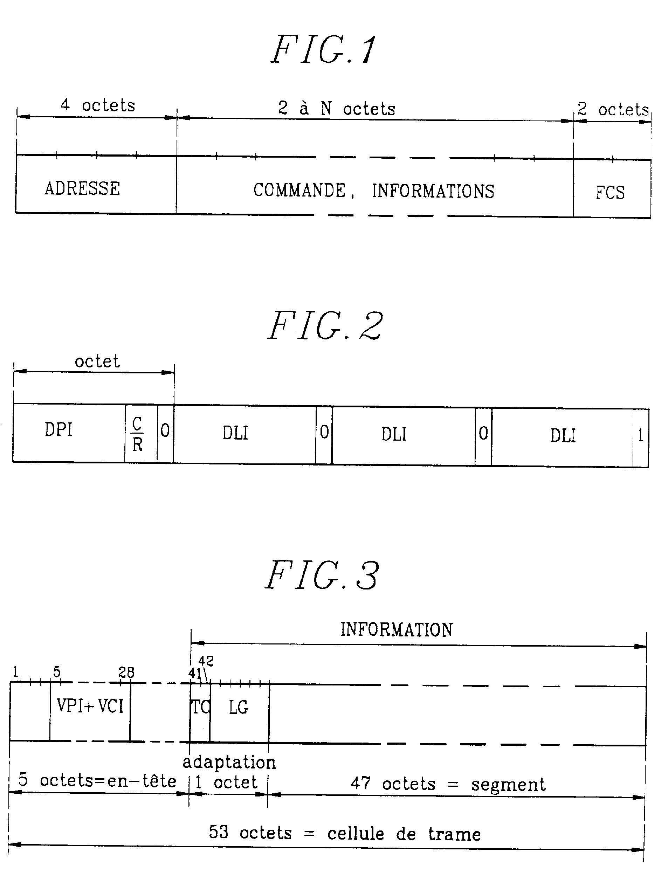

Dans la suite est adopté un format de trames qui, pour l'essentiel, est schématisé à la Fig. 1. Une trame est établie par un terminal d'un réseau numérique temporel asynchrone RTA dans lequel est inclus le relais-commutateur. Une telle trame est composée d'un champ d'adresses à 4 octets, d'un champ de commande et d'information ayant au moins 2 octets, et d'un champ de séquence de contrôle de trame à deux octets FCS. Chaque trame est découpée en segments de 47 octets, afin d'être transmise dans le réseau RTA ; ainsi, lorsque le nombre d'octets dans le champ de commande et d'information est inférieur à un multiple de 47, la trame est complétée en conséquence par des octets non significatifs.

Le champ d'adresse est structuré comme indiqué à la Fig. 2 et comprend un premier octet prédéterminé sans intérêt pour la présente invention, et trois autres octets définissant un identificateur de liaison de données DLI. Cet identificateur est un identificateur logique de connexion, ayant une signification locale. La valeur de cet identificateur est déterminée au moment de l'établissement de la connexion par le terminal devant transmettre la trame, puis par le relais-commutateur traversé par la trame. Il n'est pas nécessaire d'exploiter la totalité des bits de l'identificateur DLI dans chaque relais de trame ; le nombre de bits de l'identificateur exploités détermine la taille d'une mémoire de traduction et d'aiguillage MTA inclus dans le relais.

Le champs FCS est une suite de 16 bits permettant, à la réception, de détecter une erreur de transmission.

Chaque segment de 47 octets issu du découpage d'une trame est préalablement inclus dans une cellule de données à 53 octets.

Comme montré à la Fig. 3, le format d'une cellule consiste en un en-tête à 5 octets et un champ d'information à 48 octets.

L'en-tête est, lui-même, structuré en sous-champs, parmi lesquels un champ VPI correspondant aux bits de rang 5 à 12 et un champ VCI correspondant aux bits de rang 13 à 28. Les champs VPI et VCI identifient une liaison temporelle asynchrone. Une cellule ne contenant pas d'information est dite vide, et est signalée par VPI=VCI=0.

Dans le champ d'information d'une cellule, le segment de trame est précédé par un champ d'adaptation ayant un octet. Le champ d'adaptation est structuré en deux sous-champs TC et LG. Le premier sous-champ TC comprend deux bits de type de cellule prenant les valeurs suivantes :
- "10" pour une première cellule BOM d'une trame,
- "00" pour une cellule COM intermédiaire entre les premières et dernières cellules d'une trame,
- "01" pour une cellule EOM de fin d'une trame, et
- "11" pour une cellule SSM contenant une trame complète.

Le second sous-champ LG a 6 bits qui sont significatifs dans les cellules EOM et SSM et qui indique le nombre d'octets utiles dans la cellule.

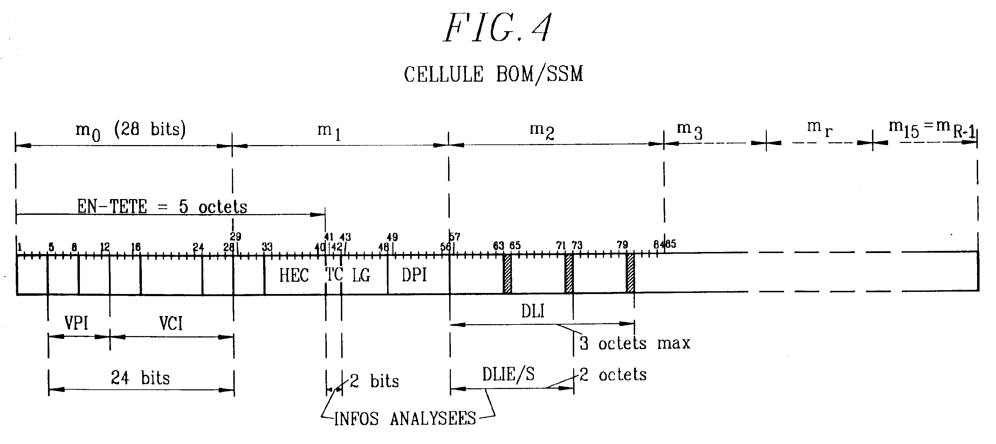

Quand la segmentation est effectuée sur une trame, la première cellule BOM ou SSM d'une trame contient, comme montré à la Fig. 4, les champs VPI, VCI, TC, LG et DLI, qui sont les seuls champs exploités par le relais-commutateur de trames.

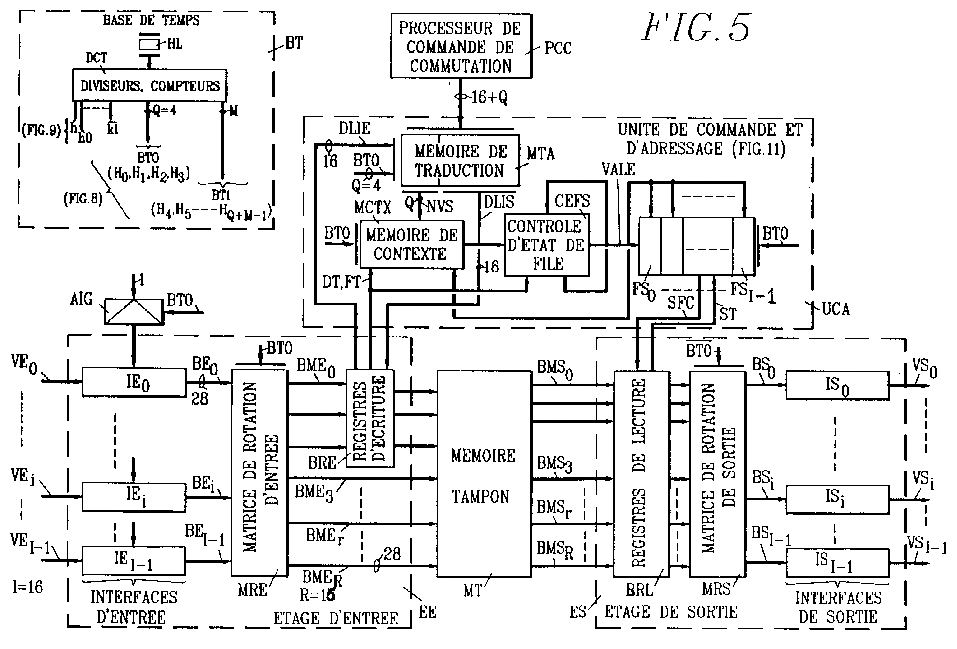

Comme montré schématiquement à la Fig. 5, le relais-commutateur de trames comprend essentiellement un étage d'entrée EE, une mémoire tampon MT, un étage de sorties ES, une unité de commande et d'adressage UCA, un processeur de commande de commutation PCC et une base de temps BT.

Le relais commute des trames sous forme de cellules entre I voies d'entrée numériques temporelles asynchrones $VE_O$ à $VE_{I-1}$ et I voies de sorties temporelles asynchrones $VS_O$ à $VS_{I-1}$. Les trames entrantes dans les voies d'entrée comme les trames sortantes dans les voies de sortie ne sont par entrelacées. En d'autres termes, dans une voie d'entrée ou de sortie, les cellules d'une trame ne sont pas séparées par les cellules d'une autre trame ; toutes les cellules d'une trame arrivent jointives au relais de trames, c'est-à-dire ne sont pas séparées par des cellules vides.

L'étage d'entrée EE a pour rôle d'orienter les données TC et DLI d'une trame qui participe à la fonction de relais, vers l'unité de commande et d'adressage UCA et d'appliquer en écriture des informations résiduelles de chaque trame en mémoire tampon MT. L'unité UCA a pour rôle de déterminer la voie de sortie d'une trame en fonction des informations TC et DLI. L'étage de sortie ES est chargé de transmettre une trame sur la voie de sortie vers laquelle elle a été relayée.

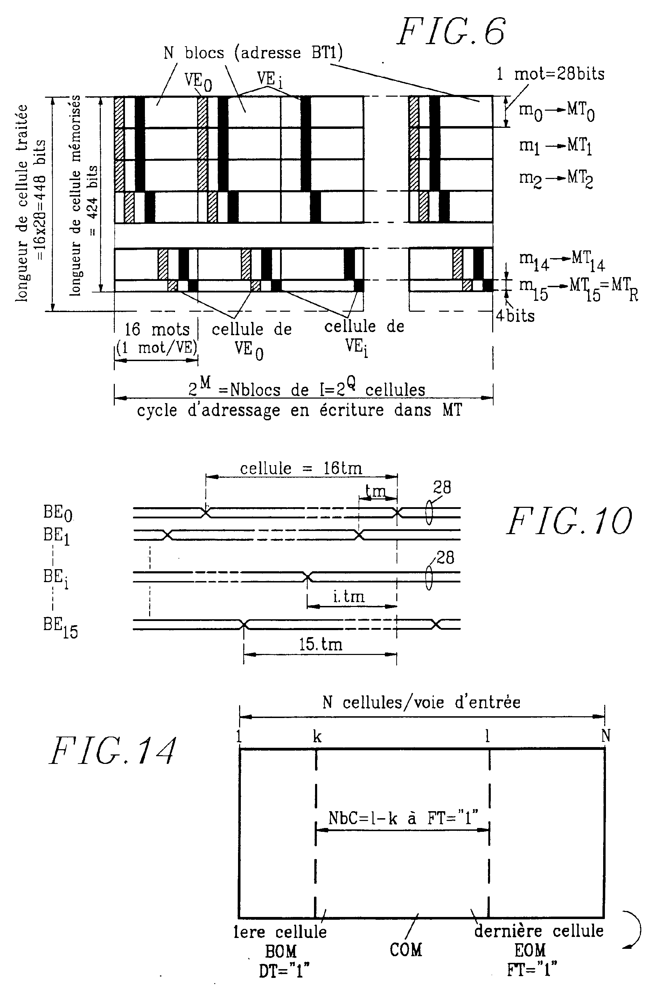

Dans la suite, on considère que le nombre I de voies d'entrée et le nombre I de voies de sortie sont égaux à 16. Ce nombre pourrait, tout aussi bien, être égal à une puissance de 2 inférieure, par exemple 2, 4, ou 8, sans remise en cause de l'organisation du relais-commutateur de trames ; la seule conséquence serait de diminuer les contraintes temporelles. Comme déjà dit, une cellule comprend 53 octets ; cependant pour simplifier la réalisation du relais, chaque cellule est agrandie à 56 octets, ce qui permet de considérer qu'une cellule est composée de R = 16 mots de 28 bits $m_0$ à $m_{15}$. En conséquence, les (16 x 28) - (6 + 47) 8 = 24 dernier bits dans le dernier mot $m_{15}$ sont sans signification, et seuls les quatre premiers bits de ce dernier mot sont significatifs, comme montré à la Fig. 6.

La base de temps BT comprend classiquement une horloge locale HL à une fréquence multiple entière du débit binaire dans les voies d'entrée et de sortie. A partir de cette horloge locale et au moyen de diviseurs de fréquence, de compteurs et de circuits logiques simples DCT, la base de temps établit de nombreux signaux d'horloge nécessaires aux diverses fonctions du relais-commutateur. Ces signaux sont des signaux principaux $H_0$ à $H_{Q+M-1}$ qui définissent des adresses de mot dans la mémoire tampon MT, et des signaux secondaires de fréquence plus grande qui commandent notamment les écritures et lectures de mot et de partie de mot.

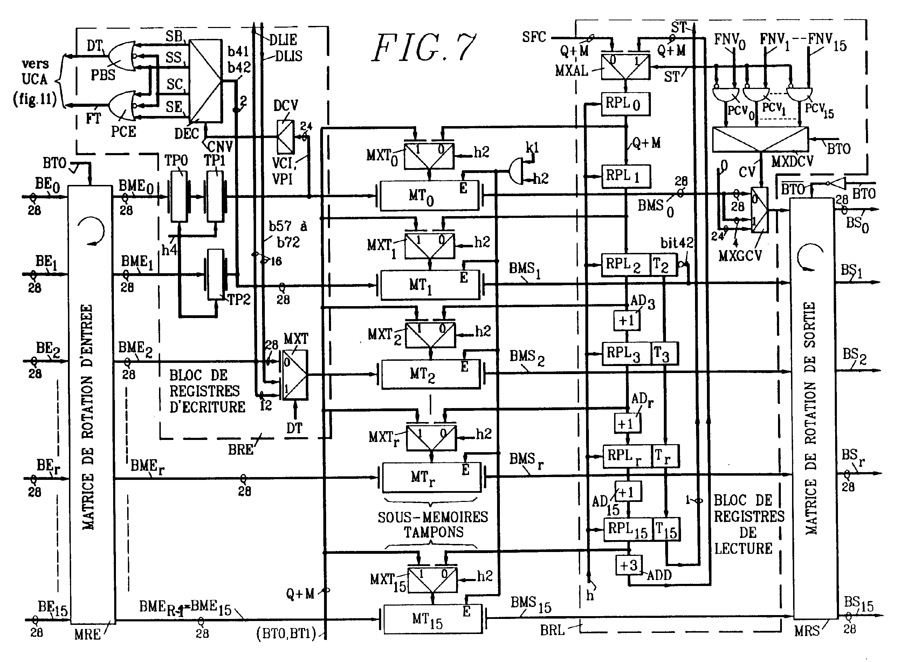

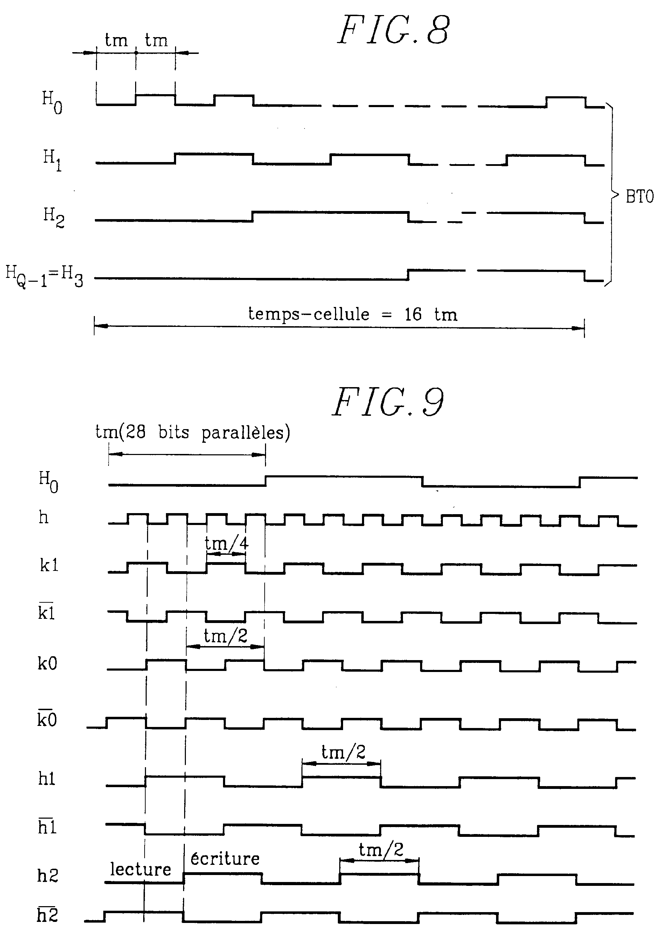

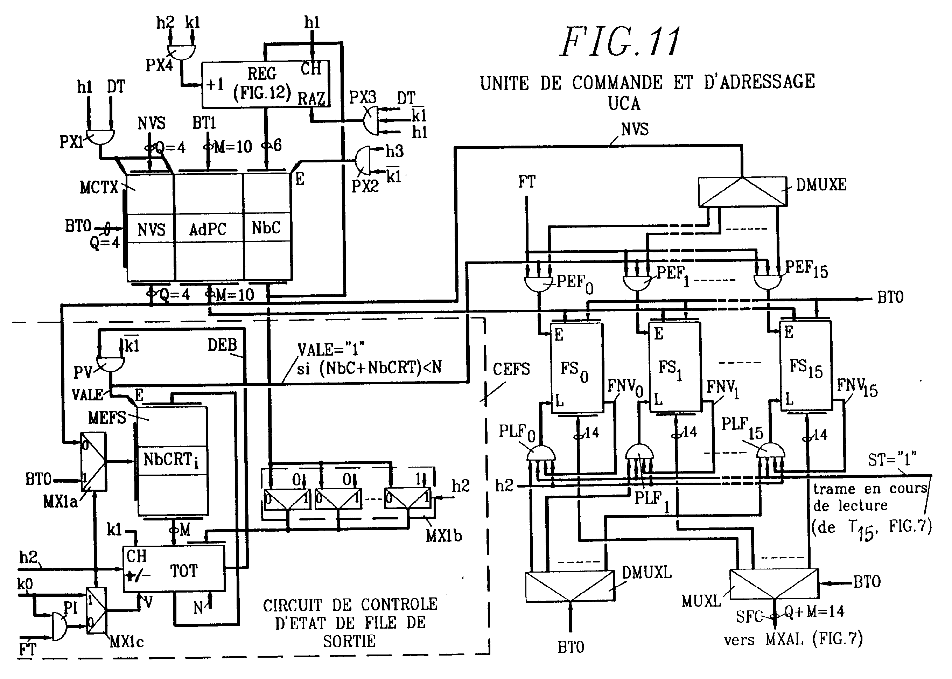

Comme montré à la Fig. 7, la mémoire tampon MT est composée de R = 16 sous-mémoires identiques et indépendantes $MT_0$ à $MT_{15}$. Une sous-mémoire $MT_r$, où r est en indice entier compris entre 0 et R - 1 = 15, est destinée à stocker les mots $m_r$ ayant le rang r dans toutes les cellules. Chaque mot est appliqué sous la forme de 28 bits parallèles pour être écrit dans la mémoire à travers un bus respectif

à 28 fils $BME_r$, et de même, est lu pour être transmis sous la forme de 28 bits parallèles dans un bus respectif de sortie à 28 fils $BMS_r$.

Si $H_0$ est un signal d'horloge dont la demi-période définit un "temps-mot" tm, c'est-à-dire l'intervalle de temps occupé par un mot à 28 bits, il apparaît que Q = 4 signaux d'horloge en phase $H_0$, $H_1$, $H_2$, $H_{Q-1} = H_3$ ayant des périodes respectives 2 tm, 4 tm, 8 tm, $2^Q$ tm sont nécessaires pour écrire 1 = $2^Q$ = 16 mots provenant des I voies $VE_0$ à $VE_{I-1}$, successivement dans chaque sous-mémoire, et comme on le verra dans la suite, pour écrire les R = 16 mots d'une même cellule respectivement dans les sous-mémoires $MT_0$ à $MT_{15}$. Les signaux $H_0$ à $H_3$, désignés ensemble par BT0, sont montrés à la Fig. 8 et déterminent ainsi les adresses des sous-mémoires et aussi les adresses des voies d'entrée $VE_0$ à $VE_{15}$ dans chacune des sous-mémoires.

Selon le schéma de la Fig. 6, les cellules sont stockées obliquement dans les sous-mémoires $MT_0$ à $M_{15}$ sous une forme sensiblement parallèle et diagonale, dite "paragonale", comme décrit dans la EP-A-0 113 639. Chaque sous-mémoire $MT_O$ à $MT_{15}$ contient ainsi N blocs de I = 16 mots à 28 bits parallèles, où l'entier N définit la capacité de la mémoire tampon MT en fonction du nombre de cellules moyen par trame et du taux de perte de cellule par voie d'entrée, et donc la capacité de la mémoire à stocker des trames. Pour repérer ces N blocs, la base de temps BT établit M autres signaux d'horloge $H_Q$ à $H_{Q+M-1}$ ayant des périodes $(2^{Q+M}$ tm) = 32 à $(2^{Q+M}$ tm) respectivement désignées ensemble par BT1 dans la suite. Les signaux BTO et BT1 constituent ainsi l'adresse d'écriture d'un mot à 28 bits dans une sous-mémoire $MT_r$.

Comme montré à la Fig. 9, en dépendance d'un signal d'horloge maître h ayant une demi-période égale à tm/8, la base de temps BT fournit des signaux d'horloge k1 et k0 de période tm/4 respectivement en phase avec les fronts montants et descendants du signal h, des signaux d'horloge h1 et h0 de demi-période tm/2 respectivement en phase avec des fronts descendants de rangs impairs et pairs du signal h, ainsi que des signaux $\overline{k1}$, $\overline{kO}$, $\overline{h1}$, et $\overline{hO}$ respectivement complémentaires des signaux précités.

Ainsi, chaque temps-mot tm est décomposé en deux temps dévolus, l'un à la lecture en mémoire tampon et correspondant à h2 = "0", et l'autre à l'écriture et correspondant à h2 = "1". Pour chaque sous-mémoire $MT_r$, un multiplexeur $MXT_r$ sélectionne, sous la commande du signal h2, l'adresse d'écriture ou de lecture. Le signal k1.h2 commande plus précisément l'écriture.

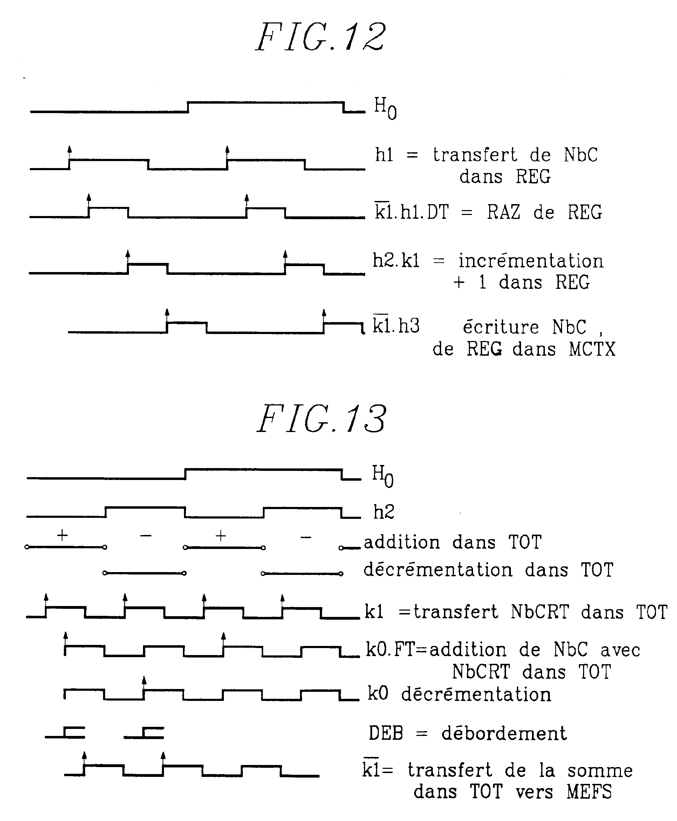

D'autres signaux résultant d'opérations logiques simples sur les signaux d'horloge sont également produits, comme montrés aux Figs. 12 à 14, et leur rôle sera justifié dans la suite.

Comme montré aux Figs. 5 et 7, l'étage d'entrée EE comprend I = 16 interfaces d'entrée $IE_0$ à $IE_{15}$ respectivement reliées aux voies $VE_0$ à $VE_{15}$, un circulateur MRE et un bloc de registres d'écriture BRE.

Le rôle d'un interface d'entrée $IE_i$ est d'assurer la synchronisation du début de cellule et la synchronisation du début de trame en fonction des signaux BT0, et la parallélisation des cellules dans la voie $VE_i$ en des mots à 28 bits parallèles dans un bus $BE_i$.

La synchronisation de cellule consiste à détecter le début d'une cellule dans le flux de bits sérialisées arrivant dans la voie d'entrée $VE_i$. Pour cela est utilisé un champ de contrôle d'erreur d'en-tête à 8 bits HEC, les bits du champ HEC correspondant aux bits 33 à 40 (Fig. 4) contenus dans l'en-tête de chaque cellule. Dans le principe, la synchronisation de cellule est déclarée acquise quand le calcul du syndrome sur les 40 bits courants de l'en-tête de cellule donne un résultat nul.

La synchronisation de trame consiste à retrouver le début d'une trame dans le flux de cellules sérialisées arrivant dans la voie $VE_i$. On sait que la première cellule d'une trame a un code TC = "10" pour une cellule BOM, et TC = "11" pour une cellule SSM. A partir du code TC s'effectue la recherche de début de trame. Quand le début d'une trame est détecté, un calcul du syndrome de la trame est déclenché. Ce calcul ne prend en compte ni les en-têtes de cellule ni les champs d'adaptation TC + LG. De plus, seuls les octets significatifs d'une cellule de fin de trame EOM ou SSM, dont leur nombre est indiqué par le champ LG, entrent dans le calcul du syndrome. A la fin du calcul, après les LG octets significatifs d'une cellule EOM ou SSM, la synchronisation de trame est acquise lorsque le résultat du calcul est nul. Dans le cas contraire, une erreur est détectée, à la suite, par exemple, d'une erreur de transmission, ou d'une perte ou d'un gain de cellule.

Chaque cellule sérialisée dans la voie $VE_i$ est mise en parallèle sur 28 bits et mémorisée dans un convertisseur série-parallèle et dans une file FIFO inclus dans l'interface $IE_i$. Chaque fois qu'un mot HEC est détecté, l'information de début de cellule sous la forme d'un bit à état prédéterminé $d_i$ est également mémorisée dans la file. Si une erreur est détectée lors de la validation de la séquence de contrôle de trame FCS inclus dans les deux derniers octets significatifs de la dernière cellule EOM ou SSM de la trame courante, la dernière cellule n'est pas écrite dans la file. L'absence de la dernière cellule de la trame sera exploitée par l'unité de commande et d'adressage UCA pour ne pas retransmettre cette trame.

Il apparaît ainsi que les interfaces d'entrée $IE_0$ à $IE_{15}$ ont des fonctions quelque peu similaires à celles des circuits d'entrée $CE_0$ à $CE_{15}$ décrits dans la EP-A-0113639, afin de synchroniser entre elles les cellules et trames respectivement dans les voies d'entrée $VE_0$ à $VE_{15}$, et les décaler temporellement les unes par rapport aux autres, d'un temps-mot tm, comme montré à la Fig. 10. Ce décalage temporel résultant d'une conversion parallèle-diagonale impose que les mots de même rang $M_r$ dans des cellules synchrones transmis par les bus $BE_0$ à $BE_{15}$ soient décalés les uns par rapport aux autres du temps-mot tm. Le décalage temporel est commandé par un démultiplexeur d'aiguillage AIG, dont l'entrée de données est à l'état "1", et les entrées de sélection reçoivent les adresses BTO à la période tm pour établir les I = 16 signaux logiques respectivement rythmant la lecture des files FIFO dans les interfaces $IE_0$ à $IE_{15}$.

En référence à la Fig. 7, les bus $BE_0$ à $BE_{15}$ ayant 28 fils relient respectivement les sorties des files FIFO dans les interfaces $IE_0$ à $IE_{15}$ à des ports d'entrée du circulateur MRE qui est une matrice de rotation. Cette matrice multiplexe les mots à 28 bits parallèles de même rang $m_0$ à $m_{15}$ dans les cellules synchrones décalées temporellement, dans les bus $BME_0$ à $BME_{15}$. Si r désigne le rang d'un mot dans une cellule et i le rang de la voie d'entrée $VE_i$ et du bus $BE_i$, où i et r sont des entiers compris entre 0 et 15, le mot $m_r$ de rang r d'une cellule transmise par le bus $BE_i$ sort de la matrice MRE par le bus $BME_r$ en même temps que sortent par le bus $BME_i$ le mot $m_i$ de rang i d'une cellule transmise par le bus $BE_r$, et par le bus $BME_0$ le mot $m_0$ de rang 0 d'une cellule transmise par le bus $BE_{i+r}$. En particulier, il est à noter que le champ de liaison temporelle asynchrone à 24 bits VPI + VCI est transmis par le premier bus $BME_0$, le champ de type de cellule TC à 2 bits est transmis par le second bus $BME_1$, et le champ d'identification de liaison DLI à 3 octets est transmis par le troisième bus $BME_2$.

En l'absence du bloc de registres d'écriture BRE, 16 mots de rangs différents et de cellules différentes sont écrits à chaque temps-mot en mémoire tampon, à l'adresse indiquée par le couple (BTO, BT1).

Par rapport à une cellule donnée en sortie de la matrice d'entrée MRE, le mot $m_0$ de la cellule se trouve sur le bus $BME_0$ au temps $tm_0$, et le mot $m_r$ se trouve sur le bus $BME_r$ au temps $tm_r$. Les informations nécessaires au traitement d'une trame se trouvent dans les mots $m_1$ et $m_2$ d'une cellule qui sont alors respectivement retardés de deux temps-mot dans des registres en séries TP0 et TP1 et d'un temps-mot dans un registre TP2 . Ces trois registres possèdent chacun 28 étages parallèles et reçoivent le signal d'horloge h2. Au troisième temps-mot suivent :

- Les 24 bits dans les mots VPI et VCI à la sortie du registre TP1 sont décodés par un détecteur de cellule vide DCV sous la forme d'un circuit OU pour déterminer si la cellule est vide, auquel cas le traitement de la cellule est désarmé, en appliquant un signal CNV = "0" à une entrée de validation d'un décodeur de 2 bits DEC.
- Les deux bits du mot de type de cellule TC, aux rangs 41 et 42 dans la cellule, sont transmis par le registre TP2 et décodés par le décodeur DEC en un signal "1" sur l'une parmi quatre sorties SB, SS, SC et SE du décodeur DEC, correspondant aux cellules BOM, SSM, COM et EOM lorsque le décodeur DEC est activé par CNV = "1" ; les sorties SB et SS du décodeur DEC sont liées à deux entrées d'une porte OU, PBS, qui fournit un signal DT à l'état "1" pour signaler un début de trame, et les sorties SS et SE du décodeur DEC sont reliées à deux entrées d'une porte OU, PCE, qui fournit un signal FT à l'état "1" pour signaler une fin de trame ; la sortie SC du décodeur DEC est reliée à des entrées inverses des portes PBS et PCE.

- Le nouveau mot $m_2$ de la cellule est déterminé : si on suppose que les deux premiers octets DLIE du champ DLI sont utilisés, les octets DLIE sont transmis à une mémoire de traduction MTA (Fig. 5) qui les remplace par une nouvelle valeur DLIS lorsque la cellule est du type "première" BOM ou SSM, ou les octets DLIE demeurent inchangés lorsque la cellule n'est pas du type "première". Ces dernières opérations sont réalisées par un multiplexeur MXT dont des premières entrées sont reliées au bus $BME_2$ et des secondes entrées sont reliées à seize sorties DLIS de la mémoire MTA et aux douze derniers fils du bus $BME_2$ ; ces premières et secondes entrées sont sélectionnées par le signal de début de trame DT.

Les trois mots $m_0$, $m_1$ et $m_2$ de la même cellule donnée sont alors écrits en sous-mémoires $MT_0$, $MT_1$ et $MT_2$ à l'adresse donnée par la valeur courante de (BT0, BT1). Au temps-mot suivant, le mot $m_3$ de ladite cellule, est écrit en sous-mémoire $MT_3$ à l'adresse (BT0, BT1) + 1 (mod 16N), etc. La cellule est rangée en mémoire tampon tel qu'indiqué à la Fig. 6.

L'organisation schématique de l'unité de commande et d'adressage UCA est indiquée dans la Fig. 5. Les éléments fonctionnels et essentiels de cette unité UCA sont la mémoire de traduction et d'aiguillage MTA, une mémoire de contexte MCTX, des files d'adresses de voie de sortie $FS_0$ et $FS_{15}$ et un circuit de contrôle d'état de file de sortie CEFS.

La mémoire de traduction et d'aiguillage MTA montrée à la Fig. 5 est une mémoire RAM contenant (16.2Y) mots de liaison DLIS. L'entier y est inférieur à (8 - 1) x 2 = 14 et désigne le nombre de bits utiles dans un mot DLIE transmis dans le bus $BME_2$, comme montré à la Fig. 4. A chaque mot DLIE déterminant une adresse d'écriture en combinaison avec l'adresse BTO de la voie d'entrée $VE_0$ à $VE_{15}$ à chaque temps-mot tm correspond un nouveau mot de liaison à 16 bits DLIS lu dans la mémoire MTA et associé avec un numéro à 4 bits NVS de la voie de sortie $VS_0$ à $VS_{15}$ que doit emprunter la trame dans laquelle est incluse la cellule courante. Le nouveau mot DLIS est appliqué aux secondes entrées du multiplexeur MXT pour être écrit dans la sous-mémoire MT2, et le numéro NVS est fourni à une première "colonne" de la mémoire de contexte MCTX.

La mémoire de traduction et d'aiguillage MTA est mise à jour par le processeur de commande PCC lors de l'établissement d'une liaison.

La mémoire de contexte MCTX contient seize triplets déterminant seize contextes respectivement associés aux trames en cours de traitement reçues par les seize voies d'entrée $VE_0$ à $VE_{15}$, et adressés cycliquement par les mots BT0.

Ainsi, à chaque trame en cours de réception, comme montré à la Fig. 11, correspond un contexte incluant le numéro de la voie de sortie NVS à 4 bits lu dans le mémoire MTA, l'adresse AdPC du bloc de la sous-mémoire $MT_0$ où est écrit la première cellule de la trame, et le nombre NbC des cellules de la trame écrites en mémoire tampon MT. On suppose, à titre d'exemple selon la réalisation illustrée aux Figs. 6 et 11, que la mémoire tampon a une capacité de $2^M = 2^{10}$ cellules par voie d'entrée, ce qui conduit à des mots d'adresse d'écriture AdPC déduits des 10 bits de BT1, et que le nombre maximum NC de cellules dans une trame est égal à $2^6 = 64 < 2^M$, soit 6 bits pour coder le nombre NbC. Les deux premières colonnes de la mémoire MCTX assignées aux nombres NVS et aux adresses AdPC sont commandées en écriture (E) au début des trames par un signal DT.h1 produit par une porte ET à deux entrées PX1. La troisième colonne de la mémoire MCTX assignée aux nombres NbC est commandée en écriture par un autre signal logique $\overline{kl}$.h3 à travers une porte ET à deux entrées PX2.

Le nombre NbC est mis à jour au moyen d'un registre d'incrémentation à 6 bits parallèles REG qui incrémente d'une unité le nombre NbC lu en réponse à une cellule de la trame en cours de réception. Le registre REG offre une entrée de remise à zéro RAZ commandé par le signal DT. $\overline{kl}$.h1 à travers une porte ET à trois entrées PX3, une entrée d'incrémentation +1 commandée par un signal h2.k1 à travers une porte ET à deux entrées PX4, et une entrée de chargement CH recevant le signal h1.

R = 16 files de sortie FIF0, $FS_0$ à $FS_{15}$, sont respectivement associées aux voies de sortie $VS_0$ à $VS_{15}$. Une file de sortie $FS_i$ mémorise les adresses à 10 bits AdPC de première cellule des trames qui ont été complètement écrites en mémoire tampon et qui sont destinées à la voie $VS_i$, et qui ne sont pas complètement lues. Les files $FS_0$ à $FS_{15}$ ont des bus d'entrée de données reliées aux 10 sorties de la seconde colonne AdPC de la mémoire de contexte MCTX, et aux 4 sorties $BT_0$ de la base de temps. Des bus de sortie à 14 fils des files $FS_0$ à $FS_{15}$ sont reliés à un multiplexeur d'adresse de lecture MUXL ayant un bus de sortie à 14 fils SFC, et sont sélectionnés cycliquement par les mots BTO dans le multiplexeur MUXL.

Les files $FS_0$ à $FS_{15}$ sont commandées en écriture (E) par un démultiplexeur DMUXE recevant des mots NVS à 4 bits lus dans la première colonne de la mémoire MCTX, et par I=16 portes ET à trois entrées $PEF_0$ à $PEF_{15}$ ayant des premières entrées reliées respectivement aux I sorties du démultiplexeur DMUXE. Des secondes entrées des portes $PEF_0$ à $PEF_{15}$ reçoivent le signal de fin de trame FT. Des troisièmes entrées des portes $PEF_0$ à $PEF_{15}$ reçoivent un signal de validation d'écriture VALE du circuit de contrôle CEFS.

Les adresses AdPC + BT0 lues dans les files $FS_0$ à $FS_{15}$ sont multiplexées dans un multiplexeur MUXL. La lecture des files est commandée par I = 16 portes ET à quatre entrées $PLF_0$ à $PLF_{15}$ ayant des premières entrées directes reliées respectivement aux I sorties d'un démultiplexeur DMUXL. Des secondes entrées inverses des portes $PLF_0$ à $PLF_{15}$ reçoivent un signal de trame ST qui est à l'état "1" tant qu'une trame est en cours de lecture pendant le temps-mot cyclique correspondant à la file et la voie associées. Des sorties des files $FS_0$ à $FS_{15}$ appliquent à des troisièmes entrées directes des portes $PLF_0$ à $PLF_{15}$, des signaux $FNV_0$ à $FNV_{15}$, qui sont chacun à l'état "1" tant que la file associée n'est pas vide et donc contient au moins une adresse de première cellule. Enfin, des quatrièmes entrées directes des portes $PLF_0$ à $PLF_{15}$ reçoivent le signal logique h2 afin de lire l'une des files $FS_0$ à $FS_{15}$ pendant une opération d'écriture dans la mémoire tampon.

Le circuit de contrôle d'état de file de sortie CEFS contient une mémoire MEFS stockant I = 16 nombres $NbCRT_0$ à $NBCRT_{15}$ de cellules à retransmettre respectivement vers les voies de sortie $VS_0$ à $VS_{15}$ et donc des nombres associés aux files de sortie $FS_0$ à $FS_{15}$. Comme les adresses BT1, les nombres $NbCRT_0$ à $NbCRT_{15}$ sont limités par le nombre de cellules pouvant être écrites en mémoire tampon MT et provenant d'une même voie d'entrée, et sont donc limités à $N=2^M=2^{10}$. La mémoire MEFS est adressée alternativement pendant un temps-mot tm, par le numéro de voie courant NVS lu en mémoire MCTX, en réponse à h2 = "0", et par le numéro de voie d'entrée BT0, en réponse à h2 = "1", à travers un multiplexeur MX1a.

Le circuit CEFS comprend également un registre-totaliseur TOT ayant M=10 premières entrées de données reliées au bus de sortie de données de la mémoire MEFS, et six secondes entrées de données reliées au bus de sortie de la troisième colonne NbC de la mémoire de contexte MCTX, à travers des premières entrées d'un multiplexeur MX1b. Six secondes entrées du multiplexeur MX1b sont portées aux états "000001" représentatifs du chiffre 1. Des entrées de sélection des multiplexeurs MX1a et Mx1b et d'un troisième multiplexeur MX1c dans le circuit CEFS, et une entrée de commande d'incrémentation (+) / décrémentation (-) du registre TOT reçoivent le signal h2. L'incrémentation ou la décrémentation sélectionnée dans le registre TOT est validée par un état "1" à une entrée V de ce registre qui est reliée à une sortie du multiplexeur MX1c. Les entrées du multiplexeur MX1c reçoivent le signal k0 et, à travers une porte ET de validation d'incrémentation à deux entrées PI, le signal (k0.FT). Le bus de sortie à 10 fils du registre-totalisateur TOT est relié aux entrées de données de la mémoire MEFS. Dans cette mémoire, l'écriture est commandée par le signal de validation VALE =$(\overline{DEB}.kl)$ fourni par une porte ET PV, où DEB désigne un signal de débordement qui est fourni par le registre TOT. Le signal DEB est à l'état "1" lorsque le résultat de l'opération, en fait une incrémentation, effectuée dans le registre TOT, est supérieur au nombre maximum N de cellules par voie d'entrée que peut stocker la mémoire tampon MT.

Le principe général de fonctionnement de l'unité de commande et d'adressage UCA est le suivant, en référence avec les Figs. 7 et 11.

A chaque temps-mot tm, l'unité UCA reçoit les signaux de type de cellule DT et FT et les bits d'identificateur DLIE de la cellule reçus par les bus $BME_1$ et $BME_2$. Les 14 bits significatifs parmi ces 24 bits d'identificateur sont interprétés comme le champ d'identification DLIE d'une trame, si le champ TC a la valeur BOM ou SSM, c'est-à-dire si DT = "1" et FT = "0".

- Si TC = BOM ou SSM, et donc DT = "1" et FT = "0", DLIE est traduit en DLIS qui détermine le numéro de la voie de sortie ; un contexte (NVS+AdPC+NbC) associé à la trame est créé.
- Si TC = COM, et donc DT = FT = " 0 ", le contexte et particulièrement le nombre NbC est mis à jour.
- Si TC = EOM ou SSM, et donc DT = "0" et FT = "1", toutes les cellules de la trame ont été reçues; l'unité UCA décide si la trame peut être retransmise en fonction de son contexte et de l'état d'occupation de la voie de sortie destinataire.

Ces opérations sont maintenant détaillées. A chaque temps-mot, la valeur de BT0 indique le numéro de la voie d'entrée qui est prise en compte dans l'unité UCA.

La mémoire de traduction et d'aiguillage MTA (Fig. 5) est adressée à chaque temps-mot par le couple (BT0, DLIE) pour fournir au multiplexeur MXT (Fig.7) la valeur du nouveau mot DLIS qui sera inclus dans la trame en sortie du relais-commutateur de trames, et le numéro de la voie de sortie NVS vers laquelle doit être retransmise la trame. Le nouveau mot DLIS est écrit dans la sous-mémoire tampon $MT_2$ (Fig. 7).

Comme déjà dit, à chaque trame en cours de réception est associé un contexte. La valeur BT0 adresse le contexte courant dans la mémoire MCTX. Chaque contexte contient l'adresse de la première cellule de la trame AdPC en mémoire tampon, le nombre NbC de cellules de cette trame déjà reçues, et le numéro NVS de la voie de sortie vers laquelle la trame doit être retransmise.

Si la cellule en cours est une première cellule de trame BOM ou SSM, soit DT = "1", un nouveau contexte est créé en écrivant (E) NVS à la valeur lue NVS dans la mémoire MTA et AdPC à la valeur de BT1, en réponse au signal DT.h1, puis le nombre NbC à 1, en réponse au signal $\overline{kl}$.h3. L'adresse complète d'une cellule en mémoire tampon est, en fait, le couple comprenant le numéro de voie d'entrée BT0 et le numéro BT1 du bloc de mémoire tampon (Fig. 6). Il n'est pourtant pas nécessaire de mémoriser BT0 car cette information est déjà contenue dans le rang de l'adresse du contexte dans la mémoire MCTX.

Le signal de chargement pour NbC, le signal de remise à zéro pour le registre REG, le signal d'incrémentation, et le signal de transfert de NbC dans la mémoire MCTX relativement au registre REG sont montrés à la Fig. 12. Si la cellule en cours d'écriture est une cellule intermédiaire COM ou une véritable dernière cellule EOM, soit DT ="0", le nombre de cellules NbC est incrémenté d'une unité, à travers l'entrée + 1 du registre REG. La mise à jour du nombre NbC, par l'intermédiaire du registre REG, s'effectue en quatre temps, tel qu'illustré à la Fig. 12 :

1) chargement du registre REG avec la valeur de NbC en réponse à l'adresse de la voie correspondante [BT0] ;

2) remise à zéro (RAZ) du registre REG si la cellule incidente est de type BOM ou SSM, soit DT = "1" ;

3) incrémentation du registre REG, en réponse à h2.k1 ;

4) transfert du contenu du registre REG pour l'écrire dans la troisième colonne de la mémoire MCTX.

Si la cellule en cours est une dernière cellule de trame EOM ou SSM, soit FT = "1", l'unité UCA doit décider si cette trame peut être transmise dans la voie de sortie correspondante NVS. Cette décision est basée sur la valeur du compte NbC de la trame et du compte NbCRT de la voie de sortie d'indice NVS. L'évolution du compte NbCRT indiquant à tout moment le nombre de cellules qui doivent être transmises vers la voie de sortie NVS et donc qui appartenait à des trames pour lesquelles la décision de transmission a été prise, sera détaillée plus loin.

On rappelle que la gestion de la mémoire tampon MT est non optimisée, les adresses d'écriture BT0 étant cycliques. A chaque voie d'entrée $VE_0$ à $VE_{15}$ correspond une capacité de $2^{10} = N$ places en mémoire tampon. Ces places sont gérées cycliquement en écriture de telle manière qu'une cellule arrivant sur la voie d'entrée $VE_i$ et mémorisée à l'adresse k en mémoire tampon sera écrasée N temps-cellule, soit N(16.tm) plus tard, par une cellule arrivant par la même voie d'entrée $VE_i$ ; en fait, l'adresse k est l'adresse d'un mot de rang donné de la cellule, de préférence l'adresse du premier mot $m_0$. Une cellule peut donc attendre au maximum N temps-cellule en mémoire MT avant d'être retransmise. Comme une trame est composée de plusieurs cellules, le mécanisme de prévention d'écrasement doit connaître le temps de séjour de la première cellule de chaque trame en mémoire tampon. La Fig. 14 illustre ce problème.

La première cellule d'une trame ayant (1 - k) cellules et arrivant sur la voie d'entrée $VE_i$ est mémorisée à l'adresse k. La dernière cellule de la trame est mémorisée à l'adresse 1. Le compte NbC associé à la trame, qui indique le nombre de cellules reçues de la trame, indique aussi le temps de séjour, exprimé en temps-cellule, de la première cellule de la trame dans la mémoire tampon jusqu'à la mémorisation complète de la trame. Cette première cellule sera donc écrasée au bout de [X = N - (1-k) mod N] temps-cellule après que la dernière cellule ait été mémorisée. Comme on le verra dans la suite, le circuit de contrôle CEFS ne décide de retransmettre la trame que si moins de X cellules doivent préalablement être transmises sur la même voie de sortie $VS_i$, donc si NbC + NbCRT < N. Le signal de débordement de mémoire DEB est affirmé à l'état "1" quand la trame ne peut être transmise ; dans ce cas, le signal de validation d'écriture VALE est "0", et l'adresse AdPC de la trame n'est pas écrite dans la file $FS_i$ (Fig. 11).

A chaque voie de sortie correspond une file de sortie. Cette file mémorise les adresses des premières cellules des trames à transmettre dans la voie de sortie. Le fonctionnement de l'unité UCA garantit qu'une trame, dont l'adresse est rangée dans une file de sortie, sera transmise sans risque d'écrasement. L'écriture et la lecture d'adresse AdPC dans les files se déroulent comme ci-après. Les 16 mots BT0 fournis successivement par la base de temps servent d'adresses pour la mémoire de contexte MCTX, en relation avec la voie d'entrée, et donc de compléments aux adresses AdPC écrites dans les files respectives.

A chaque temps-mot BT0, si la cellule reçue est une dernière cellule d'une trame EOM ou SSM indiquée par FT = "1" aux secondes entrées des portes ET $PEF_0$ à $PEF_{15}$ et que le circuit CEFS valide la transmission de la trame correspondante par DEB = "0", la porte correspondante $PEF_i$[BT0] est ouverte, et l'adresse de première cellule AdPC[BT0], lue dans la mémoire de contexte est écrite dans la file $FS_i$ dont l'indice i est égal en code binaire à NVS[BT0].

En lecture, les 16 files sont également considérées cycliquement, une par temps-mot. Le mot d'adresse de file BT0, décodé par le démultiplexeur DMUXL, valide l'une des portes $PLF_i$. La file courante $FS_i$ est lue si elle n'est pas vide, soit $FNV_i$ = "1", et si

la trame précédente a été retransmise complètement dans la voie de sortie associé $VS_i$, soit ST = "0".

Le mot à 14 bits SFC = [AdPC, BT0] lu dans la file $FS_i$ est alors appliqué par le multiplexeur MUXL à des premières entrées d'un multiplexeur d'adresses de lecture MXAL inclus dans un bloc de registres de lecture BRL de l'étage de sortie ES (Figs. 5 et 7).

Le fonctionnement du circuit de contrôle d'état de file CEFS est décrit ci-après. Chaque mot $NbCRT_i$ indique le nombre de cellules devant être retransmises dans la voie de sortie $VS_i$. Comme montré à la Fig. 13, chaque temps-mot tm est divisé en deux demi-périodes définies par le signal h2 et dévolues l'une à l'incrémentation et l'autre à la décrémentation du nombre $NbCRT_i$, respectivement pour h2 = "O" et h2 = "1". Les multiplexeurs MX1a, MX1b et MX1c sélectionnent les entrées à prendre en compte, en fonction de l'état du signal logique h2.

Le nombre $NbCRT_i$ est incrémenté en réponse à une dernière cellule EOM ou SSM d'une trame à retransmettre vers la voie de sortie, signalée par FT="1" en entrée de la porte PI et indiquée par l'adresse NVS[BT0] pour lire, à travers le multiplexeur MX1a (h2 = "0"), le nombre $NbCRT_i$ associé à la sortie NVS. Dans le registre-totalisateur TOT, $NbCRT_i$ et NbC[BT0] sont additionnés, et la somme est comparée au nombre maximum de cellule N. Si la somme des nombres $NbCRT_i$ et NbC[BT0] est supérieure à N, la trame est abandonnée ; ce débordement se traduit par DEB = "1" en sortie du registre TOT, et VALE = "0" en sortie de la porte PV, ce qui maintient fermée la porte ET $PEF_i$ correspondant à i = NVS[BT0] et, par suite, l'adresse AdPC[BT0] n'est pas écrite dans la file correspondante $FS_i$, et la trame est abandonnée. Dans le cas contraire, la porte PV est ouverte, la somme $NbC+NbCRT_i$ est écrite en tant que nouvelle valeur de $NbCRT_i$ dans la mémoire MEFS, et l'adresse AdPC est écrite en file $FS_i$.

Le nombre $NbCRT_i$ est décrémenté de 1 à chaque fois que la file de sortie $FS_i$ devient la file courante, soit h2 = "1" sur le multiplexeur MX1a, en considérant qu'une cellule a été transmise en réponse au mot [BTO]$_i$ correspondant. Cette décrémentation n'a lieu que tant que le nombre $NbCRT_i$ est supérieur à 0.

Lors de la phase de décrémentation, h2 ="1", le nombre $NbCRT_i$ est sélectionné par la valeur de BT0 correspondant à la file de sortie courante $FS_i$, à travers le multiplexeur MX1a, en considérant qu'une cellule a été transmise par le mot correspondant [BTO]$_i$. La décrémentation d'une unité est validée dans le multiplexeur MX1c, afin que le multiplexeur MX1b applique "000001" aux secondes entrées de données du registre TOT. La valeur décrémentée ($NbCRT_i$-1) est alors écrite dans la mémoire MEFS en réponse au signal de validation d'écriture VALE = "1".

En se reportant à la Fig. 7, l'étage de sortie ES comprend le bloc de registres de lecture de la mémoire tampon BRL, un circulateur MRS et des interfaces de sortie $IRS_0$ à $IRS_{15}$.

Le bloc de registres de lecture BRL, qui est détaillé à la Fig. 7, est prévu pour fournir les adresses de lecture des cellules à transmettre aux sous-mémoires tampons $MT_0$ à $MT_{15}$, et plus précisément, les adresses successives des R = 16 mots $m_0$ à $m_{15}$ de chacune des cellules à transmettre respectivement à des secondes entrées des multiplexeurs $MXT_0$ à $MTX_{15}$ reliés aux entrées d'adressage des sous-mémoires tampons $MT_0$ à $MT_{15}$. Le bloc BRL comprend R = 16 registres tampons de lecture $RPL_0$ à $RPL_{15}$ connectés en cascade et dont les bus de sortie à M+Q=14 fils sont reliés respectivement aux secondes entrées des multiplexeurs $MXT_0$ à $MXT_{15}$. Aux registres $RPL_2$ à $RPL_{15}$ sont respectivement adjoints des registres tampons à un étage $T_2$ à $T_{15}$ qui sont connectés en cascade. Une entrée inverse du premier registre $T_2$ est reliée au second fil du bus de sortie $BMS_1$ de la seconde sous-mémoire tampon $MT_1$ qui convoie le bit $b_{42}$ du sous-champ TC indiquant à l'état "1" une cellule de "fin de trame" EOM ou SSM (Fig. 4). Le dernier registre $T_{15}$ produit ainsi le signal ST appliqué à une entrée de sélection du registre MXAL et aux secondes entrées inverses des portes $PLF_0$ à $PLF_{15}$ (Fig. 11).

Le bus d'entrée du premier registre $RPL_0$ est relié aux sorties du multiplexeur MXAL , et les bus d'entrée des registres $RPL_1$ et $RPL_2$ sont directement reliés aux sorties des registres précédents $RPL_0$ et $RPL_1$ respectivement, puisque les mots $m_0$, $m_1$ et $m_2$ d'une cellule ont été écrits simultanément avec une même adresse d'écriture (BT0, BT1) dans les sous-mémoires $MT_0$, $MT_1$ et $MT_2$, grâce aux registres tampons TP0, TP1 et TP2. Les bus d'entrée des autres registres de lecture $RPL_3$ à $RPL_{15}$ sont reliés aux sorties des registres précédents $RPL_2$ à $RPL_{14}$ à travers des additionneurs d'une unité $AD_3$ à $AD_{15}$, respectivement. Le bus de sortie du dernier registre de lecture $RPL_{15}$ est relié à des secondes entées du multiplexeur MXAL à travers un additionneur ADD du chiffre trois. Dans ces conditions, après 16 temps-mot succédant à l'inscription de l'adresse du premier mot $m_0$ d'une cellule dans le registre $RPL_0$ et rythmés par le signal d'horloge h2 appliqué aux registres $RPL_0$ à $RPL_{15}$, l'adresse du premier mot d'une seconde cellule consécutive à la cellule précédente dans la même trame est appliquée au registre $RPL_0$ à travers le multiplexeur MXAL . En effet, il est rappelé que le rangement des cellules dans la mémoire tampon MT n'est pas optimisé et donc que deux cellules consécutives dans une même trame ont des adresses a et b telles que :

$$b = a + 16 \text{ modulo } (16.N)$$

Les mots d'une cellule étant rangés de manière quasiment diagonale en mémoire tampon, comme montré à la Fig. 6, l'adresse des trois premiers mots d'une cellule est égale à l'adresse du dernier mot de la cellule précédente issue de la même voie d'entrée, augmentée du chiffre trois. Dans les bus de sortie à 28 fils $BMS_0$ à $BMS_{15}$ des sous-mémoires $MT_0$ à $MT_{15}$, les mots $m_0$ à $m_{15}$ d'une cellule sont ainsi tous transmis successivement sous forme diagonale. Il en résulte qu'à chaque temps-mot, le bloc BRL lit 16 mots de rangs différents, respectivement dans 16 cellules différentes, à destination de 16 voies de sorties différentes.

On considère la transmission d'une cellule particulière. A un premier temps-mot, le registre $RPL_0$ contient l'adresse du premier mot $m_0$ de la cellule ; au temps-mot suivant, cette adresse est transférée dans le registre $RPL_1$ et constitue l'adresse du deuxième mot $m_1$. Pour tenir compte du rangement diagonalement temporel d'une cellule en mémoire, lors du transfert d'adresse du registre $RPL_2$ au registre $RPL_3$, puis du registre $RPL_r$ au registre $RPL_{r+1}$, jusqu'au registre $RPL_{15}$, l'adresse est incrémentée d'une unité. On notera que l'additionneur ADD donne l'adresse du premier mot de la cellule suivante issue de la même voie d'entrée.

Le processus de lecture et transmission d'une trame vers une voie de sortie destinataire $VS_i$ se déroule comme suit.

Suite à la lecture de la file de sortie $FS_i$, les sorties SFC du multiplexeur MUXL délivrent l'adresse du premier mot $m_0$ de la première cellule de la trame à transmettre ; ST étant égal à "0", cette adresse est chargée dans le registre $RPL_0$ pour lire le mot $m_0$ de la cellule. Puis à chacun des 15 temps-mot suivants, la même adresse est transférée d'un registre de lecture à l'autre pour permettre la lecture des 15 mots suivants de la cellule.

Lors de la lecture du deuxième mot dans la sous-mémoire $MT_1$, le bit $b42$ est mémorisé dans le registre $T_2$. Les états "1" et "0" de ce bit indiquent si la cellule est ou n'est pas la dernière de la trame. Le bit est propagé à chaque temps-mot du registre $T_i$ au registre $T_{i+1}$, jusqu'au registre $T_{15}$. Quand une nouvelle cellule est à transmettre sur la voie de sortie $VS_i$, deux cas se présentent.

- 1) La cellule qui vient d'être transmise était la dernière de la trame, soit ST = "0". La porte $PLF_i$ (Fig. 11) est ouverte pour lire la file $FS_i$, et donc transmettre la trame suivante vers la voie de sortie $VS_i$. Les premières entrées du multiplicateur MXAL sont sélectionnées pour transférer l'adresse de la première cellule de la trame suivante, de la file $FS_i$ au registre $RPL_0$.
- 2) La cellule qui vient d'être transmise n'est pas la dernière de la trame, soit ST = "1". La porte $PLF_i$ demeure fermée et les secondes entrées du multiplexeur MXAL sont sélectionnées pour charger le registre $RPL_0$ avec l'adresse transmise par l'additionneur ADD. La cellule suivante de la trame, dont l'adresse du premier mot est produite par l'additionneur ADD, est alors lue en mémoire tampon.

Si la file de sortie $FS_i$ est vide, soit $FNV_i$ = "0", lorsqu'une nouvelle trame doit être transmise dans la voie de sortie $VS_i$, la valeur d'adresse chargée dans le registre $RPL_0$ n'est pas significative ; néanmoins, le processus de lecture en mémoire tampon MT se déroule de la même manière. Dans ce cas, les bits 5 à 28 du mot lu dans la sous-mémoire $MT_0$, qui correspondent aux champs VPI et VCI de l'en-tête d'une cellule (Fig. 4), sont mis à "0", faisant considérer la cellule transmise comme une cellule vide.

A cette fin est prévu un multiplexeur générateur de cellule vide MXGCV dont 28 premières entrées sont reliées au bus $BMS_0$ de la sous-mémoire $MT_0$. Dans un groupe de 28 secondes entrées du multiplexeur MXGCV, quatre sont reliées aux premiers fils du bus $BMS_0$ correspondant aux bits 1 à 4 d'un mot $m_0$, et les vingt-quatre autres entrées sont portées à "0". Ces deux groupes d'entrées sont sélectionnés par la sortie CV d'un multiplexeur de signalisation de cellule vide MXCDV ayant seize entrées reliées à des sorties de portes ET à deux entrées $PCV_0$ à $PCV_{15}$ et sélectionnées par le mot BTO. Une porte $PCV_i$ a une entrée inverse recevant le signal ST et une entrée directe recevant le signal $FNV_i$. Ainsi, pour chaque voie de sortie $VS_i$, le multiplexeur MXGCV est commandé par le signal CV qui indique qu'il faut transmettre une nouvelle trame sur la voie de sortie d'indice i=BT0, lorsque ST = "0", et l'état vide la file de sortie $FS_i$.

Le circulateur de sortie MRS est une matrice de rotation analogue au circulateur MRE. Le premier port d'entrée et les quatorze autres ports d'entrée du circulateur MRS sont reliés respectivement au bus de sortie du multiplexeur MXGCV et aux bus $BMS_1$ à $BMS_{15}$.

A chaque temps-mot, seize mots de 28 bits $m_0$ à $m_{15}$ sont présents à l'entrée du circulateur MRS. Ces 16 mots appartiennent à 16 cellules différentes, ont des rangs différents et sont destinés à des voies de sortie différentes. Le rôle du circulateur MRS est de présenter chaque mot dans la voie de sortie à 28 fils parallèles $BS_i$ devant l'interface de sortie destinataire $IS_i$ à travers laquelle ledit mot sera transmis. Au cours de 16 temps-mot successifs, les 16 mots d'une cellule sont réorientés vers la même voie de sortie destinataire. Ce cycle de 16 tm dépend des adresses $\overline{BTO}$ complémentaire des adresses BTO.

Une interface de sortie $IRS_i$ a pour rôle de recalculer la séquence de contrôle de trame FCS d'une trame à retransmettre, de générer une cellule vide en cas d'absence de trame à transmettre, et enfin d'assurer l'adaptation au support de transmission constituant la voie de sortie $VS_i$.

La trame ayant été modifiée dans le relais-commutateur de trames, par traduction du champ DLIE en champ DLIS dans la mémoire MTA (Fig. 5) et à travers le multiplexeur MXT (Fig. 7), il est nécessaire de recalculer la séquence FCS avant de retransmettre la trame. Le calcul est déclenché dès le début de la trame, c'est-à-dire au début d'une première cellule BOM ou SSM et est arrêté à la fin d'une dernière cellule EOM ou SSM, en ne faisant intervenir dans le calcul que les LG-2 premiers octets significatifs du segment.

Dans le multiplexeur MXGCV du bloc BRL (Fig. 7), les champs VPI et VCI de l'en-tête de cellule sont mis à "0" si la file de sortie $FS_i$ est vide. L'interface $IS_i$ détecte cet en-tête ayant les 24 derniers bits du premier mot $m_0$ à "0" pour générer une cellule vide.

Dans la réalisation décrite ci-dessus, il a été supposé que le relais-commutateur de trames est inclus dans un réseau temporel asynchrone RTA; les voies d'entrée $VE_0$ à $VE_{15}$ et les voies de sortie $VS_0$ à $VS_{15}$ sont des voies multiplex temporelles asynchrones dans lesquelles les trames sont transmises sous forme de cellules successives.

Toutefois, le relais de trames qui vient d'être décrit peut être également utilisé dans un réseau non temporel asynchrone RNTA. Les trames, transmises dans les voies d'entrée et de sortie, sont précédées et suivies d'un fanion de configuration binaire normalisée "01111110". Deux trames successives sont séparées par un ou plusieurs fanions. Pour garantir qu'aucune suite de 8 bits dans la trame n'imite un fanion, le terminal transmettant des trames insère un bit "0" après 5 bits "1" consécutifs de trame ; à l'inverse, un terminal recevant des trames supprime tout bit "0" qui suit 5 bits "1" consécutifs de trame. Seules les interfaces $IE_0$ à $IE_{15}$ et $IS_0$ à $IS_{15}$ sont à adapter à ce nouvel environnement.

Une interface d'entrée pour réseau RNTA assure la synchronisation de trame, la cellulisation et la parallélisation. La parallélisation est semblable à celle effectuée dans une interface $IE_i$ pour réseau temporel asynchrone et déjà décrite.

La synchronisation de trame consiste d'abord à retrouver le début d'une trame dans le flux de bits arrivant par une voie d'entrée. Dès qu'un fanion est reconnu, tout élément binaire "0" qui suit 5 éléments binaires "1" consécutifs est supprimé, et le calcul du syndrome de la trame est déclenché. A la réception du fanion de fin de trame, le résultat du calcul doit être nul.

Chaque trame, au fur et à mesure de sa réception, est découpée en cellules. Cette cellulisation est conforme au processus déjà décrit ; les champs TC et LG de l'en-tête de cellule sont créés.

Une interface de sortie pour réseau RNTA recalcule la séquence FCS pour chaque trame et la retransmet dans le réseau. Le calcul de la séquence FCS est semblable à celui effectué dans une interface $IS_i$ pour réseau temporel asynchrone.

Lors de la retransmission d'une trame, les 47 octets significatifs dans chaque cellule BOM, COM et les LG octets significatifs dans chaque cellule EOM, SSM sont seulement retransmis dans la voie $VS_i$. Un élément binaire "0" est inséré après toute séquence de cinq éléments binaires "1" consécutifs, afin de garantir qu'un fanion n'est pas simulé à l'intérieur de la trame. Au moins un fanion de séparation est émis entre deux trames consécutives mais, la plupart du temps, introduire plus d'un fanion intertrame est nécessaire. En effet :

1) Puisque dans une voie de sortie ne sont retransmis ni les octets d'en-tête de cellule, ni l'octet d'adaptation (TC + LG), ni les octets de bourrage au nombre de 3 = 50 - 47 selon la réalisation précédente, il est donc nécessaire de disposer, dans l'interface de sortie, d'un registre tampon permettant de ne commencer la retransmission d'une trame que lorsqu'on dispose d'une quantité d'information suffisante pour ne pas provoquer de "coupure" d'une trame. Pendant cette attente, des fanions supplémentaire sont transmis.

2) De même, en cas d'absence de trames à transmettre, absence signalée par des cellules vides venant du circulateur de sortie MRS, des fanions intertrames sont transmis.

## Revendications

1. Relais-commutateur dans un réseau numérique asynchrone pour commuter des trames entre des voies d'entrée ($VE_i$) et des voies de sorties ($VS_i$), chacune des trames étant divisée en des cellules successives ayant un nombre prédéterminé de bits, et une première cellule dans une trame comprenant un identificateur de voie,
   ledit relais-commutateur comprenant :
   - un étage d'entrée (EE) pour détecter les cellules des trames reçues par les voies d'entrée afin de multiplexer des cellules détectées en des cellules multiplexées par cycle de voies,
   - une mémoire tampon (MT) adressée cycliquement en écriture pour mémoriser les cellules multiplexées,
   - une mémoire de traduction (MTA) pour remplacer l'identificateur de voie (DLIE) par un nouvel identificateur (DLIS) et pour associer à ce nouvel identificateur une adresse de voie de sortie destinataire (NVS),
   - une pluralité de moyens d'adressage en lecture ($FS_i$) respectivement associés aux voies de sortie ($VS_i$) pour mémoriser chacune des adresses relatives à des cellules mémorisées dans la mémoire tampon (MT) et destinées à la voie de sortie associée ($VS_i$), et

- un étage de sortie (ES) pour démultiplexer les cellules lues dans la mémoire tampon (MT) sous le contrôle des moyens d'adressage en lecture, en des cellules démultiplexées formant des trames transmises vers les voies de sortie,
caractérisé en ce qu'il comprend
- une mémoire de contexte (MCTX) pour mémoriser, pour chaque voie d'entrée (VE$_i$), l'adresse de la première cellule (AdPC) relative à une trame reçue par ladite voie d'entrée (VE$_i$) et en cours d'écriture dans la mémoire tampon (MT), et simultanément l'adresse de voie de sortie destinataire (NVS) fournie par la mémoire de traduction (MTA), en réponse à la première cellule détectée de ladite trame,
- des moyens (MCTX, REG) pour mémoriser des nombres de cellules mémorisées (NbC) relatives à des trames en cours d'écriture et reçues respectivement par lesdites voies d'entrée (VE$_i$), chacun desdits nombres étant remis à zéro au début d'une trame reçue par la voie d'entrée associée et étant incrémenté d'une unité en réponse à la mémorisation d'une cellule contenue dans ladite trame,
- une mémoire de contrôle (MEFS) pour mémoriser des nombres (NbCRT$_i$) de cellules à retransmettre respectivement dans les voies de sortie (VS$_i$) et contenues dans des trames ayant été complètement écrites dans la mémoire tampon (MT), et
- des moyens (CEFS) pour incrémenter et décrémenter lesdits nombres de cellules à retransmettre (NbCRT$_i$), un nombre de cellules à retransmettre (NbCRT$_i$) associé à une voie de sortie (VS$_i$) étant incrémenté avec le nombre de cellules mémorisées (NbC) contenues dans une trame en cours de mémorisation et destinée à ladite voie de sortie en réponse à la dernière cellule de ladite trame, afin de comparer la somme desdits nombres (NbCRT$_i$ + NbC) à une capacité de la mémoire tampon (N) relative aux cellules par voie d'entrée, pour écrire l'adresse de la première cellule (AdPC) de ladite trame dans les moyens d'adressage de lecture (FS$_i$) associés à ladite voie de sortie (VS$_i$) lorsque la somme est inférieure à ladite capacité (N), et pour décrémenter le nombre de cellules à retransmettre (NbCRT$_i$) d'une unité en réponse à chaque cellule de ladite trame lue en mémoire tampon.

2. Relais-commutateur conforme à la revendication 1, caractérisé en qu'il comprend des moyens (BRE) pour détecter dans chacune des cellules multiplexées un mot de type de cellule (TC) afin de produire un signal de début de trame en réponse à une première cellule (BOM) dans une trame contenant plusieurs cellules ou en réponse à une cellule (SSM) contenant une trame complète, et un signal de fin de trame (FT) en réponse à une dernière cellule (EOM) dans une trame contenant plusieurs cellules ou en réponse à une cellule (SSM) contenant une trame complète,
pour chaque voie d'entrée, le signal de début de trame respectif (DT) commandant l'écriture de l'adresse de voie de sortie destinataire (NVS) et de l'adresse de la première cellule de trame (AdPC) dans la mémoire de contexte (MCTX), et la remise à zéro du nombre de cellule de la trame (Nbc),
pour chaque voie de sortie (VS$_i$), le signal de fin de trame (FT) commandant l'incrémentation du nombre de cellules à retransmettre (NbcRT$_i$) et, lorsque ladite somme est inférieure à ladite capacité de mémoire tampon (N), le transfert de l'adresse de la première cellule de trame (AdPc), de la mémoire de contexte (McTX) aux moyens d'adressage en lecture associés (FS$_i$).

3. Relais-commutateur conforme à la revendication 1 ou 2, caractérisé en ce qu'il comprend des moyens (RPL$_0$ à RPL$_{15}$, AD$_3$ à AD$_{15}$, ADD) recevant cycliquement des adresses de première cellule (AdPC) lues respectivement dans les moyens d'adressage en lecture (FS$_0$ à FS$_{15}$) pour déduire, pour chaque trame en cours de lecture en mémoire tampon, les adresses des cellules de ladite trame en fonction de l'adresse de la première cellule de ladite trame.

4. Relais-commutateur conforme à la revendication 3, caractérisé en ce que la dernière cellule d'une trame (EOM ou SSM) est repérée par un mot particulier (bit 42) et en ce que le relais-commutateur comprend des moyens (T2 à T15, ST) pour autoriser la déduction des adresses de cellules d'une trame en cours de lecture et bloquer la lecture des moyens d'adressage en lecture (FS$_i$) associés à la voie de sortie (VS$_i$) à laquelle est destinée ladite trame, tant que le mot particulier de la dernière cellule de ladite trame n'a pas été détecté.

5. Relais-commutateur conforme aux revendications 2 et 4, caractérisé en ce qu'il comprend des moyens pour inhiber (CNV=O) tout signal de début ou de fin de trame (DT,FT) en réponse à un mot d'indication de cellule vide (VCI, VPI) dans lesdites cellules multiplexées, et des moyens (MXGCV, MXDCV) pour insérer un mot d'indication de cellule vide (VCI+VPI=O) à destination d'une voie de sortie ($VS_i$) lorsque les moyens d'adressage en lecture ($FS_i$) associés à ladite voie de sortie ($VS_i$) sont vides d'adresse de cellule mémorisée (AdPC).

6. Relais-commutateur conforme à l'une quelconque des revendications 1 à 5, caractérisé en ce que chaque cellule est partagée en des mots ($m_r$) en nombre prédéterminé (R), et chacune desdites cellules multiplexées est mémorisée progressivement mot par mot dans la mémoire tampon (MT), et en ce que l'adresse de la première cellule d'une trame (AdPC) est constituée par l'adresse du premier mot de ladite première cellule de ladite trame.

## Patentansprüche

1. Vermittlungsanordnung in einem digitalen und asynchronen Übertragungsnetz zum Durchschalten von Rahmen zwischen Eingangswegen ($VE_i$) und Ausgangswegen ($VS_i$), wobei jeder Rahmen in aufeinander folgende Zellen mit einer vorgebenen Anzahl von Bits unterteilt ist und eine erste Zelle in einem Rahmen einen Wegindikator aufweist, und wobei die Vermittlungsanordnung umfaßt:

   - eine Eingangsstufe (EE) zum Feststellen der von den Eingangswegen empfangenen Zellen der Rahmen, um die festgestellten Zellen in gemultiplexte Zellen wegzyklisch zu multiplexen,
   - einen beim Einschreiben zyklisch adressierten Pufferspeicher (MT), um die gemultiplexten Zellen zu speichern,
   - einen Übersetzungsspeicher (MTA) zum Ersetzen des Wegindikators (DLIE) durch einen neuen Indikator (DLIS) und zum Zuordnen einer Destinations-Ausgangswegadresse (NVS) zu dem neuen Indikator,
   - eine Vielzahl von Lese-Adressenmitteln ($FS_i$), die jeweils den Ausgangswegen ($VS_i$) zugeordnet sind, um jede Adresse zu denjenigen Zellen, die in dem Pufferspeicher (MT) gespeichert und für den zugehörigen Ausgangsweg ($VS_i$) bestimmt sind, zu speichern, und
   - eine Ausgangsstufe (ES) zum Demultiplexen der aus dem Pufferspeicher (MT) unter Steuerung der Lese-Adressenmittel ausgelesenen Zellen in gedemultiplexten Zellen, die zu den Ausgangswegen übertragene Rahmen bilden, gekennzeichnet durch
   - einen Kontextspeicher (MCTX) zum Speichern für jeden Eingangsweg ($VE_i$) die Adresse der ersten Zelle (AdPC) relativ zu

einem vom Eingangsweg ($VE_i$) und während des Einschreibens in dem Pufferspeicher (MT) empfangenen Rahmen, und gleichzeitig zum Speichern der Destinations-Ausgangswegadresse (NVS), die vom Übersetzungsspeicher (MTA) geliefert wird, bei Auftreten der ersten in dem Rahmen festgestellten Zelle,

   - Mittel (MCTX, REG) zum Speichern der Anzahlen von Zellen, die relativ zu den Rahmen beim Einschreiben gespeichert (NbC) und jeweils von den Eingangswegen ($VE_i$) empfangen worden sind, wobei jede der Anzahlen am Anfang eines vom zugehörigen Eingangsweg empfangenen Rahmens auf Null gesetzt und beim Speichern einer in dem Rahmen enthaltenen Zelle um eine Einheit inkrementiert wird,
   - einen Steuerspeicher (MEFS) zum Speichern der Anzahlen ($MbCRT_i$) der Zellen, die jeweils zur Übertragung in die Ausgangswege ($VS_i$) vorgesehen und in den in dem Pufferspeicher (MT) vollständig eingeschriebenen Rahmen enthalten sind, und
   - Mittel (CEFS) zum Inkrementieren und Dekrementieren der Anzahlen der zur Übertragung vorgesehenen Zellen ($NbCRT_i$), wobei eine Anzahl der zur Übertragung vorgesehenen Zellen ($NbCRT_i$), die einem Ausgangsweg ($VS_i$) zugeordnet ist, um die Anzahl der gespeicherten (NbC) Zellen, die in einem im Abspeichern befindlichen und für den Ausgangsweg bestimmten Rahmen enthalten sind, bei Auftreten der letzten Zelle des Rahmens inkrementiert werden, um die Summe der Anzahlen ($NbCRT_i$ + NbC) mit einer Kapazität des Pufferspeichers (N) relativ zu den Zellen pro Eingangsweg zu vergleichen und um die Adresse der ersten Zelle (AdPC) des Rahmens in die Leseadressenmittel ($FS_i$), die dem Ausgangsweg ($VS_i$) zugeordnet sind, einzuschreiben, solange die Summe unterhalb der Kapazität (N) ist und um die Anzahl der zum Übertragen bestimmten Zellen ($NbCRT_i$) um eine Einheit bei jeder Zelle des in dem Pufferspeicher gelesenen Rahmens zu dekrementieren.

2. Vermittlungsanordnung nach Anspruch 1, gekennzeichnet durch Mittel (BRE) zum Feststellen eines zelltypischen Wortes (TC) in jeder der gemultiplexten Zellen um ein Rahmenanfangssignal bei einer ersten Zelle (BOM) in einem Rahmen mit mehreren Zellen oder bei einer einen vollständigen Rahmen einhaltenden Zelle (SSM) zu erzeugen, sowie ein Rahmenendesignal (FT) bei einer letzten Zelle (EOM) in einem Rahmen mit mehrern Zellen oder bei einer einen vollständigen Rahmen enthaltenden Zelle (SSM) zu erzeugen,

wobei für jeden Eingangsweg das jeweilige Rahmenanfangssignal (DT) das Einschreiben der Destinationsausgangswegadresse (NVS) und der Adresse der ersten Zelle des Rahmens (AdPC) in den Kontextspeicher (MCTX) sowie das Rückstellen der Zellenanzahl des Rahmens (MbC) auf Null steuert, und wobei für jeden Ausgangsweg (VS$_i$) das Rahmenendesignal (FT) das Inkrementieren der Anzahl der zum Übertragen vorgesehenen Zellen (NbCRT$_i$) und, wenn die Summe kleiner ist als die Kapazität des Pufferspeichers (N), die Übertragung der Adresse der ersten Zelle des Rahmens (AdPC) vom Kontextspeicher (MCTX) zu den zugehörigen Leseadressenmittel (FS$_i$) steuert.

3. Vermittelungsanordnung nach Anspruch 1 oder 2, gekennzeichnet durch Mittel (RPL$_0$ bis RPL$_{15}$), AD$_3$ bis AD$_{15}$, ADD), die zyklisch die Adressen der ersten Zelle (AdPC), die jeweils in die Leseadressenmittel (FS$_0$ bis FS$_{15}$) gelesen werden, empfangen, um für jeden beim Einlesen in den Pufferspeicher befindlichen Rahmen die Adressen der Zellen des Rahmens gemäß der Adresse der ersten Zelle des Rahmens abzuleiten.

4. Vermittlungsanordnung nach Anspruch 3, dadurch gekennzeichnet, daß die letzte Zelle eines Rahmens (EOM oder SSM) durch ein spezielles Wort (bit 42) markiert wird und daß die Vermittlungsanordnung Mittel (T2 bis T15, ST) zum Autorisieren der Ableitung der Adressen der Zellen eines im Lesen befindlichen Rahmens und zum Blockieren des Lesens der Leseadressenmittel (FS$_i$), die dem Ausgangsweg (VS$_i$), für den der Rahmen bestimmt ist, zugeordnet sind, aufweist, solange wie das spezielle Wort der letzten Zelle des Rahmens nicht festgestellt worden ist.

5. Vermittlungsanordnung nach Ansprüchen 2 und 4, gekennzeichnet durch Mittel zum Sperren (CNV=0) des ganzen Rahmenanfangs- oder Rahmenende-Signals (DT, FT) bei einem Indikatorwort einer leeren Zelle (VCI, VPI) in den gemultiplexten Zellen, sowie durch Mittel (MXGCV, MXDCV) zum Einfügen eines Indikatorworts der leeren Zelle (VCI + VPI = 0), die für einen Ausgangsweg (VS$_i$) bestimmt ist, bis die Leseadressenmittel (FS$_i$), die dem Ausgangsweg (VS$_i$) zugeordnet sind, an gespeicherten Zellenadressen (AdPC) leer sind.

6. Vermittlungsanordnung nach einem der Ansprüche 1 bis 5, dadurch gekennzeichnet, daß jede Zelle in Wörter (m$_r$) vorbestimmter Anzahl (R)

aufgeteilt ist, und daß jede der gemultiplexten Zellen progressiv Wort für Wort in dem Pufferspeicher (MT) gespeichert wird, und daß die Adresse der ersten Zelle eines Rahmens (AdPC) von der Adresse des ersten Wortes der ersten Zelle des Rahmens gebildet ist.

## Claims

1. Switching relay in an asynchronous digital network for switching frames between input paths (VE$_i$) and output paths (VS$_i$), each of the frames being divided into successive cells having a predetermined number of bits, and a first cell in a frame comprising a path identifier, said switching relay comprising:
   - an input stage (EE) for detecting the cells of the frames received by the input paths so as to multiplex detected cells into cells multiplexed per path cycle,
   - a cyclically write addressed buffer memory (MT) for memorizing the multiplexed cells,
   - a translation memory (MTA) for replacing the path identifier (DLIE) by a new identifier (DLIS) and for associating a destination output path address (NVS) with said new identifier,
   - a plurality of read addressing means (FS$_i$) respectively associated with the output paths (VS$_i$) for memorizing each of the addresses relating to cells memorized in the buffer memory (MT) and destined for the associated output path (VS$_i$), and
   - an output stage (ES) for demultiplexing the cells read in the buffer memory (MT) under the control of the read addressing means, into demultiplexed cells forming frames transmitted to the output paths, characterized in that it comprises
   - a context memory (MCTX) for memorizing, for each input path (VEi), the address of the first cell (AdPC) in relation to a frame received by said input path (VE$_i$) and being written in the buffer memory (MT), and simultaneously the destination output path address (NVS) supplied by the translation memory (MTA), in response to the first cell detected in said frame,
   - means (MCTX, REG) for memorizing numbers of memorized cells (NbC) in relation to frames being written and received respectively by said input paths (VEi), each of said numbers being reset at zero at the beginning of a frame received by the associated input path and being incremented by one unity in response to the memorizing of a cell contained in said frame,

- a checking memory (MEFS) for memorizing numbers (NbCRT$_i$) of cells to be retransmitted respectively in the output paths (VS$_i$) and contained in frames having been completely written in the buffer memory (MT), and

- means (CEFS) for incrementing and decrementing said numbers of cells to be retransmitted (NbCRT$_i$), a number of cells to be retransmitted (NbCRTi) associated with an output path (VS$_i$) being incremented with the number of memorized cells (NbC) contained in a frame being memorized and destined for said output path in response to the last cell of said frame, in order to compare the sum of said numbers (NbCRT$_i$ + NbC) with a capacity of the buffer memory (N) in relation to the cells per input path, to write the address of the first cell (AdPC) of said frame in the read addressing means (FS$_i$) associated with said output path (VS$_i$) when the sum is less than said capacity (N), and to decrement by one unity the number of cells to be retransmitted (NbCRT$_i$) in response to each cell of said frame read in buffer memory.

2. Switching relay according to claim 1, characterized in that it comprises means (BRE) for detecting in each of the multiplexed cells a cell type word (TC) thereby deriving a start-of-frame signal in response to a first cell (BOM) in a frame containing several cells or in response to a cell (SSM) containing a complete frame, and an end-of-frame signal (FT) in response to a last cell (EOM) in a frame containing several cells or in response to a cell (SSM) containing a complete frame,
for each input path, the respective start-of-frame signal (DT) controlling the writing of the destination output path address (NVS) and the address of the first frame cell (AdPC) in the context memory (MCTX), and the resetting at zero of the frame cell number (NbC), for each output path (VS$_i$), the end-of-frame signal (FT) controlling the incrementing of the number of cells to be retransmitted (NbCRT$_i$) and, when said sum is lower than said buffer memory capacity (N), the transfer of the address of said first frame cell (AdPC) from the context memory (MCTX) to associated read addressing means (FS$_i$).

3. Switching relay according to claim 1 or 2, characterized in that it comprises means (RPL$_0$ to RPL$_{15}$, AD$_3$ to AD$_{15}$, ADD) cyclically receiving first-cell addresses (AdPC) respectively read in the read addressing means (FS$_0$ to FS$_{15}$) for deducing, for each frame being read in buffer memory, the addresses of the cells of said frame as a function of the address of said first cell of said frame.

4. Switching relay according to claim 3, characterized in that the last cell of a frame (EOM or SSM) is marked by a particular word (bit 42) and in that the switching relay comprises means (T2 to T15, ST) for authorizing the deduction of the cell addresses of a frame being read and for inhibiting the reading of the read addressing means (FS$_i$) associated with the output path (VS$_i$) for which said frame is destined, as long as the particular word of the last cell of said frame has not been detected.

5. Switching relay according to claims 2 and 4, characterized in that it comprises means for inhibiting (CNV = O) any start-of-frame or end-of-frame signal (DT, FT) in response to an empty cell indicating word (VCI, VPI) in said multiplexed cells, and means (MXGCV, MXDCV) for inserting an empty cell indicating word (VCI + VPI = O) destined for an output path (VS$_i$) when the read addressing means (FS$_i$) associated with said output path (VS$_i$) are devoid of any memorized cell address (AdPC).

6. Switching relay according to any one of claims 1 to 5, characterized in that each cell is divided into words (m$_r$), in predetermined number (R), and each of said multiplexed cells is gradually memorized word by word in the buffer memory (MT), and in that the address of the first cell of a frame (AdPC) is constituted by the address of the first word of said first cell of said frame.

## FIG.1

| 4 octets | 2 à N octets | 2 octets |
|---|---|---|
| ADRESSE | COMMANDE , INFORMATIONS | FCS |

## FIG.2

octet

| DPI | $\frac{C}{R}$ | 0 | DLI | 0 | DLI | 0 | DLI | 1 |

## FIG.3

INFORMATION

VPI+ VCI    TC   LG

5 octets=en−tête | adaptation 1 octet | 47 octets = segment

53 octets = cellule de trame

FIG. 4

CELLULE BOM/SSM

*FIG.5*

BASE DE TEMPS

HL

DCT

DIVISEURS, COMPTEURS

(FIG.9) $h_{h0}$ $ki$

Q=4 M

BTO

$(H_0, H_1, H_2, H_3)$

(FIG.8)

BT1

$(H_4, H_5 - - - H_{Q+M-1})$

BT

PROCESSEUR DE COMMANDE DE COMMUTATION — PCC

16+Q

DLIE

16 BTO

Q=4

MEMOIRE DE TRADUCTION — MTA

VALE

UNITE DE COMMANDE ET D'ADRESSAGE (FIG.11)

MCTX Q NVS DLIS CEFS

BTO MEMOIRE DE CONTEXTE

CONTROLE D'ETAT DE FILE

BTO

DT,FT 16

$FS_0$ $FS_{I-1}$ SFC ST UCA

AIG BTO

$VE_0$ $IE_0$ $BE_0$ Q 28 BTO $BME_0$ REGISTRES D'ECRITURE $BMS_0$ REGISTRES DE LECTURE BTO MATRICE DE ROTATION DE SORTIE $BS_0$ $IS_0$ $VS_0$

$VE_i$ $IE_i$ $BE_i$ MATRICE DE ROTATION D'ENTREE BRE MEMOIRE TAMPON $BMS_3$ $BME_3$ $BMS_r$ $BS_i$ $IS_i$ $VS_i$

$VE_{I-1}$ $IE_{I-1}$ $BE_{I-1}$ $BME_r$ $BMS_R$ $BS_{I-1}$ $IS_{I-1}$ $VS_{I-1}$

I=16 INTERFACES D'ENTREE MRE $BME_R$ R=16 28 MT ES BRL MRS INTERFACES DE SORTIE

ETAGE D'ENTREE EE ETAGE DE SORTIE

18

EP 0 451 029 B1

*FIG.6*

N blocs (adresse BT1)

VE$_0$    VE$_i$

1 mot=28bits

longueur de cellule traitée =16x28=448 bits

longueur de cellule mémorisés = 424 bits

m$_0 \rightarrow$ MT$_0$

m$_1 \rightarrow$ MT$_1$

m$_2 \rightarrow$ MT$_2$

m$_{14} \rightarrow$ MT$_{14}$

m$_{15} \rightarrow$ MT$_{15}$=MT$_R$

4bits

16 mots (1 mot/VE)

cellule de VE$_0$

cellule de VE$_i$

$2^M$ =Nblocs de I=$2^Q$ cellules

cycle d'adressage en écriture dans MT

cellule = 16tm

BE$_0$

BE$_1$

BE$_i$

BE$_{15}$

tm

28

28

i.tm

15.tm

*FIG.10*

*FIG.14*

N cellules/voie d'entrée

1        k              l        N

NbC=l−k à FT="1"

1ere cellule
BOM
DT="1"

COM

dernière cellule
EOM
FT="1"

*FIG. 7*

# FIG.8

temps-cellule = 16 tm

# FIG.9

FIG.11

UNITE DE COMMANDE ET D'ADRESSAGE
UCA

CIRCUIT DE CONTROLE
D'ETAT DE FILE DE
SORTIE

EP 0 451 029 B1

# *FIG.12*

h1 = transfert de NbC
dans REG

$\overline{k1}$.h1.DT = RAZ de REG

h2.k1 = incrémentation
+ 1 dans REG

$\overline{k1}$.h3    écriture NbC ,
de REG dans MCTX

# *FIG.13*

H$_0$

h2

addition dans TOT

décrémentation dans TOT

k1 =transfert NbCRT dans TOT

k0.FT=addition de NbC avec
NbCRT dans TOT

k0 décrémentation

DEB = débordement

$\overline{k1}$= transfert de la somme
dans TOT vers MEFS